# EUROPEAN PATENT APPLICATION

(11) **EP 1 952 746 A2**
(43) Date of publication of application: **06.08.2008**
(21) Application number: 08101164.5
(22) Date of filing: 31.01.2008
(51) Int. Cl.: A47L 9/24, A47L 9/02

(54) **Vacuum hose attachment**

(30) Priority: 02.02.2007 US 899017 P; 11.10.2007 US 870886
(71) Applicant: Black & Decker Inc., Newark, Delaware 19711 (US)
(72) Inventor: Phelan, Katherine, Towson, MD 21204 (US); Wright, Stuart J, Timonium, MD 21093 (US)
(74) Representative: Bell, Ian Stephen

(57) **Abstract**

A vacuum appliance (10) having a housing (12) with an attached intake port (14). A plurality of attachment nodes (22) are axially located about the intake port (14). An accessory (18) with a plurality of axially located grooves (30) selectively engage the plurality of attachment nodes (22) to establish a locking relationship with the intake port (14).

## Description

The present disclosure relates to vacuum accessory locks. More specifically, the present disclosure relates to an attachment and locking mechanism for interchangeable vacuum accessories.

The statements in this section merely provide background information related to the present disclosure and may not constitute prior art.

Vacuum appliances originated in the late 1800s and are now the most commonly used tool for picking up both wet and dry debris. Vacuum appliances may be found in various configurations, including household or industrial vacuum cleaners (bag, cyclonic or robotic), central vacuum cleaners, steam cleaners or wet/dry vacuum cleaners. Although design and complexity may vary, vacuum appliances are typically comprised of five components: a motor, a fan, a housing, an exhaust port and an intake port.

In use, an electric current is applied to the motor for rotationally driving the fan. The shape and design of the fan blades forces air in a single direction, typically away from the intake port and towards the exhaust port. The moving air causes a pressure drop behind the fan, generating suction. Suction directed at the intake port pulls debris into the vacuum housing where it is contained for later disposal.

Since the motor typically runs at a constant speed, the air flow into the vacuum appliance is also constant. However, various media may require more suction than provided with the typical air flow. Suction varies with the size and shape of the intake port; therefore, different accessories can be attached to the intake port for various debris media. Also, it is occasionally necessary to have an alternate vacuum appliance configuration to reach difficult locations (i.e. narrow locations, high locations, etc). The accessories may vary the length of the intake hose for extended reach ability or shape configuration. Occasionally, it is also necessary to combine accessories to provide for even further extended reach and increased air flow.

In current industry standard applications, accessory attachment is achieved via a friction fit or a clip-type locking mechanism. In the friction fit, a connection end of the accessory may be tapered, and the tapered end may be inserted into the intake port until the two parts mate. The friction fit between the accessory and the intake port may be relied upon to hold the accessory in place. While friction fit attachment is generally acceptable for light duty applications, it can be problematic in industrial or heavy usage situations where the attachments are prone to damage. In such applications, minor accessory damage may reduce vacuum seal, in turn causing reduced suction pressure.

While the clip-type locking mechanisms may overcome some of the friction fit problems, they usually require additional pieces. This can lead to additional cost and additional failure modes.

Accordingly, a first embodiment of the present disclosure includes a vacuum appliance having a housing with an intake port. A plurality of attachment nodes are axially located about the intake port. An accessory with a plurality of axially located grooves selectively engages the plurality of attachment nodes to establish a locking relationship with the intake port.

An alternate embodiment of the present disclosure includes a vacuum appliance attachment mechanism for a vacuum appliance having an attached intake port with a proximal end attached to the vacuum appliance, an intermediary portion with a plurality of axially located attachment nodes and an elongated distal end. A vacuum accessory having a plurality of axially located spiral grooves is receivably attached to the plurality of axially located attachment nodes of the intermediary portion of the intake port.

Further areas of applicability will become apparent from the description provided herein. It should be understood that the description and specific examples are intended for purposes of illustration only and are not intended to limit the scope of the present disclosure.

The drawings described herein are for illustration purposes only and are not intended to limit the scope of the present disclosure in any way.
Figure 1 is a perspective view of a vacuum appliance utilizing an accessory attachment mechanism in accordance with the principles of the present teachings;
Figure 2 is an exploded view of the accessory attachment mechanism of Figure 1;
Figure 3 is a perspective view of a hose accessory and a nozzle accessory before attachment;
Figure 4 is a perspective view of the hose accessory and the nozzle accessory after attachment;
Figure 5 is a perspective view of the hose accessory and a friction-fit tool accessory after attachment;
Figure 6 is a cross-sectional view of an attachment between a hose accessory and an intake port in accordance with a second embodiment of the present teachings;
Figure 7 is a cross-sectional view of an attachment between a hose accessory and an intake port in accordance with a third embodiment of the present teachings;
Figure 8 is a cross-sectional view of an attachment between a hose accessory and an intake port in accordance with a fourth embodiment of the present teachings; and
Figure 9 is a perspective view of an adaptor with an intake port for attachment with a vacuum accessory in accordance with an fifth embodiment of the present teachings.

The following description is merely exemplary in nature and is not intended to limit the present disclosure, application, or uses. It should be understood that throughout the drawings, corresponding reference numerals indicate like or corresponding parts and features.

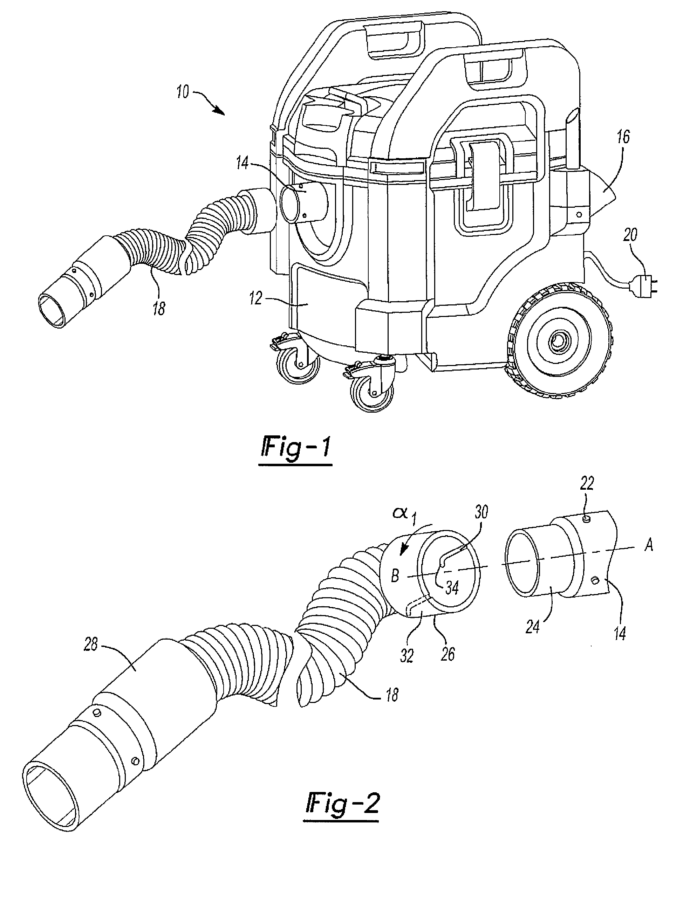

With reference to Figure 1, a vacuum appliance is depicted generally by reference number 10. The vacuum appliance 10 includes a housing 12 containing a motor (not shown), a fan (not shown), an intake port 14, an exhaust port 16, a filter (not shown) and a vacuum accessory 18. While Figure 1 depicts a typical wet/dry vacuum cleaner with a hose accessory 18 as the vacuum accessory, the present teachings may also be applied to other vacuum accessories and vacuum appliance configurations that utilize alternate vacuum accessories, such as, household or industrial vacuum cleaners (bag, cyclonic or robotic), central vacuum cleaners or steam cleaners.

The motor of the vacuum appliance 10 may be provided with an electrical current by means known in the art, for example, an electrical outlet cord 20. Electric current traveling through the electrical outlet cord 20 may be applied to the motor causing it to cycle at a constant speed. The fan may be in electrical communication with the motor and is thereby rotationally driven by the cycling of the motor.

The fan may have a suitable blade design which utilizes the rotational motion of the fan to create a pressure drop behind the blades forcing air in a single direction, also at a generally constant speed. The fan may be so situated as to cause air to flow from the intake port 14 towards the exhaust port 16. Friction between moving air particles and debris (including solids, liquids, and gases) causes the debris to enter the intake port 14. After entering the intake port 14, the debris flows into the housing 12, the filter then prevents the debris from continuing out of the exhaust port 16 with the air particles.

With reference to Figure 2, the hose accessory 18 is shown prior to attachment to the intake port 14. The intake port 14 may be fixedly attached to the housing 12 of the vacuum appliance 10 by any means known in the art. The intake port 14 may be generally tubular in shape and may define an axis, A. A plurality of attachment nodes 22 may be located about the exterior circumference of the intake port 14 defined by axis, A. Although the number of attachment nodes 22 may vary from that shown in the present embodiment, it is advantageous to standardize the number of attachment nodes 22 for maximum interchangeability. The intake port 14 may further comprise an elongated distal portion 24 adjacent to the proximal portion including the attachment nodes 22. The elongated distal portion 24 may be smaller in diameter than said proximal portion and may provide a typical friction fit arrangement as is known in the art. A step portion providing a reduced diameter can be provided between the proximal and distal portions. For reference, the elongated portion 24 may be generally smooth and tubular and it may be tapered, for attachment to industry standard accessories.

The hose accessory 18 may have proximal and distal ends 26, 28. The proximal end 26 may be generally tubular in shape and may define an axis, B. The proximal end 26 may comprise a plurality of spiral grooves 30 located about the interior circumference of the hose accessory 18 defined by axis, B. The number of spiral grooves 30 may vary from that shown in the present embodiment; however it is advantageous to standardize the number of spiral grooves 30 for maximum interchangeability. Further, the number of spiral grooves 30 should be chosen to match the number of attachment nodes 22. The spiral grooves 30 may open at a top surface 32 of the proximal end 26 of the hose accessory 18 and rotate around axis, B, towards the distal end 28 at an angle, α₁. The angle, α₁, may be between 30 degrees and 60 degrees, and as shown can be approximately 45 degrees. The spiral grooves 30 may end in a generally straight portion (i.e. not spiral) 34, which is parallel to the top surface 32.

Attachment of the hose accessory 18 to the intake port 14 of the vacuum appliance 10 is accomplished by aligning the attachment nodes 22 with the spiral grooves 30 at the open top surface 32 of the proximal end 26 of the hose accessory 18. The hose accessory 18 is then rotated in a counter-clockwise motion (shown by rotational arrow) with respect to the attachment nodes 22 of the intake port 14 until the attachment nodes 22 reach the generally straight portion 34 of the spiral grooves 30. When the attachment nodes 22 reach the generally straight portion 34, the hose accessory 18 is cammed into engagement with the intake port 14 and a vacuum tight seal is created between the hose accessory 18 and the intake port 14. Rotation of the hose accessory 18 in a clockwise motion assists in releasing this vacuum tight seal.

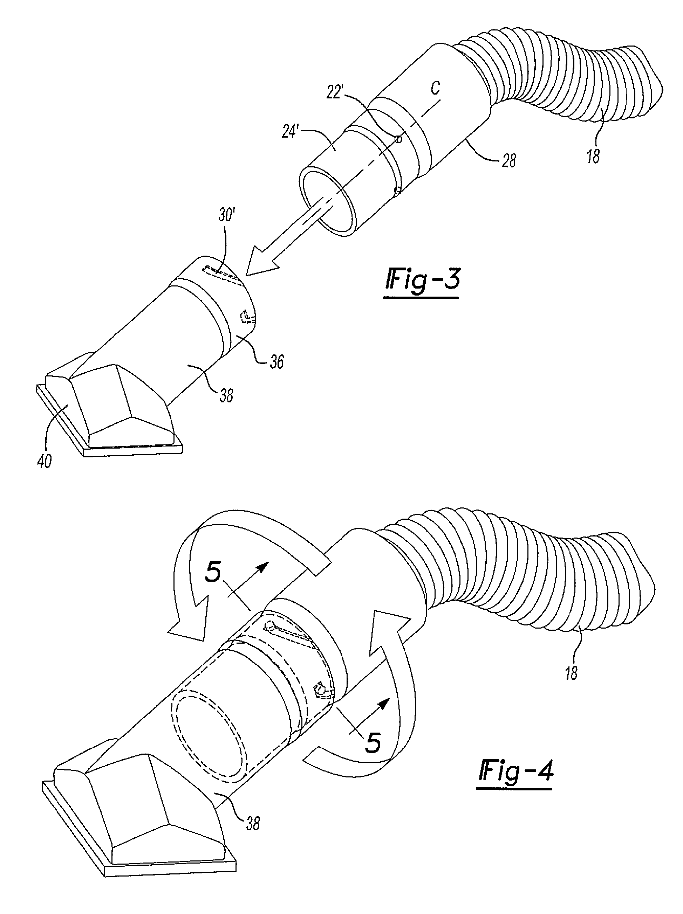

Referring now to Figure 3, the distal end 28 of the hose accessory 18 may be generally tubular in shape and may define an axis, C. The distal end of the hose can define an intake port to the vacuum appliance. The distal end 28 of the hose accessory 18 may comprise a plurality of attachment nodes 22', which may be located about the exterior circumference of the distal end 28 defined by axis, C. The number of attachment nodes 22' may vary from that shown in the present embodiment; however it is advantageous to standardize the number of attachment nodes 22' for maximum interchangeability.

The distal end 28 of the hose accessory 18 may further comprise an elongated portion 24' adjacent to the attachment nodes 22'. The elongated portion 24' may be a typical friction fit arrangement as is known in the art. For reference, the elongated portion 24' may be generally smooth and tubular or it may be tapered, for attachment to current industry standard accessories.

As should be understood, the distal end 28 of the hose accessory 18 may accept a proximal end 36 of another vacuum accessory, as shown in Figure 4 as a nozzle accessory 38. The configuration of the proximal end 36 in the nozzle accessory 38 may be similar to that described for the hose accessory 18 (including interior spiral grooves 30'), but may incorporate an alternately configured proximal end 40 for performing alternate tasks. It should be understood that the alternate vacuum accessory 38 may be configured with any proximal end 40 configuration known in the art, such as an upholstery brush, a dusting brush, a crevice tool, or an extension wand. Attachment between the vacuum accessories 18, 38 is identical to the attachment between the intake port 14 and the hose accessory 18.

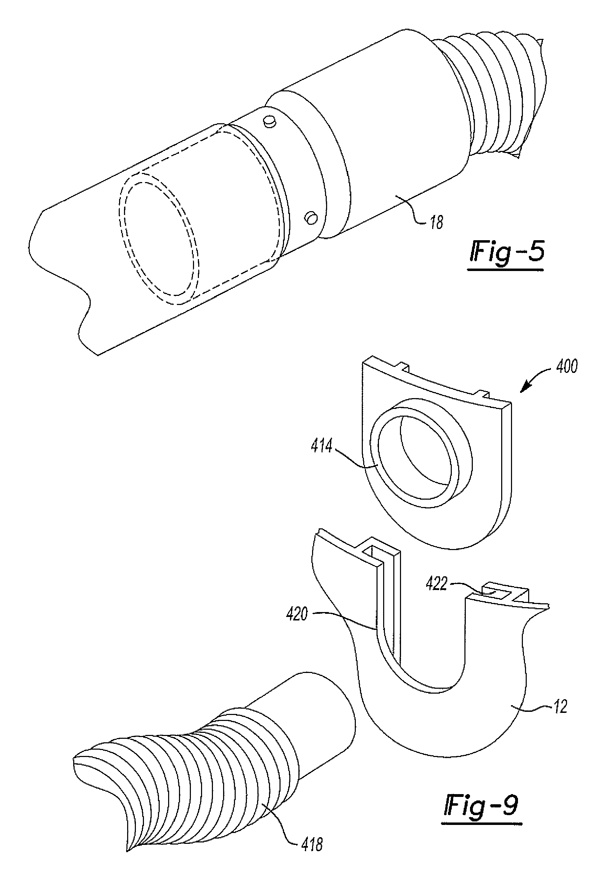

As Figure 5 depicts, the vacuum accessories 18, 38 may be connected as described herein or may also be typical industry standard, friction fit accessories attached to the elongated portion 24' of the hose accessory 18 as described herein.

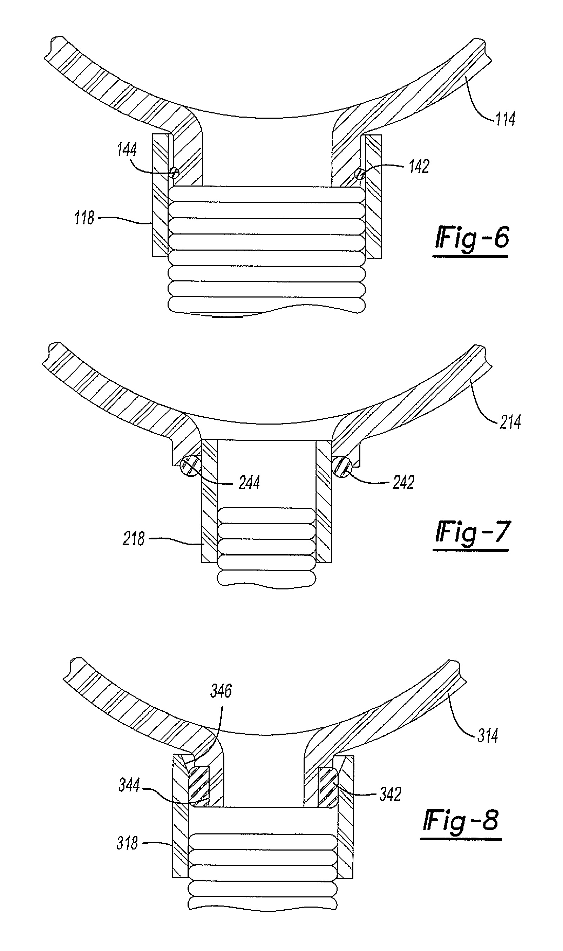

In another embodiment, an inlet port 114 of the vacuum appliance 110 may be connected to a hose accessory 118 via a soft interface as shown in Figure 6. Here, the soft interface may be an o-ring 142. The o-ring 142 may be seated in a groove 144 provided in the outward facing surface of the inlet port 114. The o-ring 142 may be fabricated from a material (i.e. an elastomeric material) that resumes its original shape when a deforming force is removed. By way of example only, the hardness rating on a Shore A scale for the o-ring 142 may be greater than 40 durometer. In the example embodiment, the hardness rating on a Shore A scale for the o-ring 142 may be in the range of 65-75 durometer.

As shown, the o-ring 142 may extend outward beyond the outer surface of the inlet port 114, and have an outer diameter that is greater than an inner diameter of the hose accessory 118. Also, the inner diameter of the hose accessory 118 may be greater than the outer diameter of the inlet port 114. Accordingly, the o-ring 142 may be compressed when the hose accessory 118 is mounted, creating a seal at the interface. At the same time, the o-ring 142 may maintain a clearance between the hose accessory 118 and the inlet port 114. In this way, the o-ring 142 may absorb impacts at the joint between the hose accessory 118 and the inlet port 114. The soft interface provided by the o-ring 142 may be implemented without any additional connecting structures (e.g., a locking member or other non-pliant structures).

By way of example only, the o-ring 142 may have a round cross-sectional shape. In alternative embodiments, the o-ring 142 may have numerous and varied cross-sectional shapes. The inlet port 114 and the hose accessory 118 may be cylindrically shaped. In alternative embodiments, the inlet port 114 and the hose accessory 118 may have corresponding tapered shapes.

Another example embodiment is depicted in Figure 7. Here, the o-ring 242 may be seated in a groove 244 provided in the inward facing surface of the inlet port 214. As shown, the o-ring 242 may extend inward beyond the inner surface of the inlet port 214, and have an inner diameter that is greater than an outer diameter of the hose accessory 218. Also, the inner diameter of the inlet port 214 may be greater than the outer diameter of the hose accessory 218. Accordingly, the o-ring 242 may be compressed when the hose accessory 218 is mounted, creating a seal at the interface. At the same time, the o-ring 242 may maintain a clearance between the hose accessory 218 and the inlet port 214.

Another example embodiment is depicted in Figure 8. Here, the o-ring 342 may be seated in a groove 344 provided in the outward facing surface of the inlet port 314. As shown, the o-ring 342 may extend outward beyond the outer surface of the inlet port 314, and have an outer diameter that is greater than an inner diameter of the hose accessory 318. Also, the inner diameter of the hose accessory 318 may be greater than the outer diameter of the inlet port 314. Accordingly, the o-ring 342 may be compressed when the hose accessory 318 is mounted, creating a seal at the interface. At the same time, the o-ring 342 may maintain a clearance between the hose accessory 318 and the inlet port 314. The inner surface of the hose accessory 318 may include a taper 346 to facilitate mounting of the hose accessory 318.

In the example embodiments depicted in Figures 6-8, the o-ring 142, 242, 342 may be seated in the groove 144, 244, 344 provided on an inner diameter of the inlet port 114, 214, 314. In alternative embodiments, the o-ring may be seated in a groove provided in a surface of the hose. It will be readily apparent that the example embodiments may implement one or more o-rings. It will also be readily apparent that the inlet port may be provided in the housing 12 of the vacuum appliance 10.

Another example embodiment is depicted in Figure 9. The housing 12 of the vacuum appliance 10 may support an adaptor 400, which may include an inlet port 414 for connection to a hose accessory 418. The housing 12 may include a notch 420 defined between opposed guide grooves 422. The adaptor 400 may be inserted into the notch 420 so that opposed edge portions of the adaptor 400 enter into (and are guided by) the opposed guide grooves 422. The adaptor 400 may be situated at a location on the housing 12 that may facilitate insertion/removal. In this example embodiment, the insertion direction of the adaptor 400 may be perpendicular to a central axis of the inlet port 414.

As the inlet port 414 and/or a connection end of the hose accessory 418 may be tapered, the hose accessory 418 may he inserted into the inlet port 414 until the two parts mate. The friction-fit between the inlet port 414 and the hose accessory 418 may hold the hose accessory 418 in place.

The adaptor 400 may be fabricated from a material (i.e. an elastomeric material) that resumes its original shape when a deforming force is removed. Thus, the adaptor 400 may offer a soft interface feature by which impacts at the joint between the hose accessory 418 and the inlet port 414 may be absorbed. The adaptor 400 may be fabricated from a material that provides sufficient hose support and shock absorbing characteristics. By way of example only, the hardness rating on a Shore A scale for the adaptor 400 may be greater than 40 durometer. In the example embodiment, the hardness rating on a Shore A scale for the adaptor 400 may be in the range of 65-75 durometer. The hardness of the adaptor 400 may be less than the hardness of the housing 12 and the hardness of the hose accessory 418. However, the hardness of the adaptor 400 may depend on the structural details of the adaptor 400 and/or the detail of the surrounding structure.

The description of the invention is merely exemplary in nature and, thus, variations that do no depart from the gist of the invention are intended to be within the scope of the invention. Such variations are not to be regarded as a departure from the spirit and scope of the invention.

## Claims

1. A vacuum appliance, comprising:
a housing;
an intake port fixedly attached to said housing;
a first plurality of attachment nodes radially spaced about said intake port at a proximal end, wherein a distal end of said intake port further comprises an elongated portion adjacent to and axially spaced from said plurality of attachment nodes, said elongated portion having a continuous generally tubular surface having a diameter smaller than said proximal end; and
an accessory having proximal and distal ends, said proximal end comprising a plurality of axially located grooves for selectively engaging said plurality of attachment nodes to establish a locking relationship with said intake port.

2. The vacuum appliance of claim 1, wherein said locking relationship creates a vacuum seal between said accessory and said intake port.

3. The vacuum appliance of claim 1, wherein said distal end of said accessory comprises a tool for transporting debris into the vacuum appliance.

4. The vacuum appliance of claim 1, wherein said distal end of said accessory comprises a second plurality of attachment nodes axially located about said distal end.

5. The vacuum appliance of claim 4, wherein said second plurality of attachment nodes is integrally formed on the exterior of said distal end of said accessory.

6. The vacuum appliance of claim 4, wherein said distal end of said accessory comprises a tool for transporting debris into the vacuum appliance.

7. The vacuum appliance of claim 1, wherein said axially located grooves are open at an end surface of said proximal end.

8. The vacuum appliance of claim 7, wherein said plurality of axially located grooves are spirally configured.

9. The vacuum appliance of claim 8, wherein said spirally configured grooves extend at an angle of about 30 degrees to about 60 degrees.

10. The vacuum appliance of claim 9, wherein said spirally configured grooves assist in breaking said vacuum seal upon removal of said accessory.

11. The vacuum appliance of claim 4, wherein said distal end of said accessory further comprises a second elongated portion adjacent to said second plurality of attachment nodes, said second elongated portion having a generally tubular surface.

12. The vacuum appliance of claim 11, wherein said generally tubular surface of said second elongated portion engages a friction fit accessory.

13. The vacuum appliance of claim 1, wherein said continuous generally tubular surface of said elongated portion is tapered.

14. A vacuum appliance attachment mechanism, comprising:
a vacuum appliance;
an intake port attached to said vacuum appliance, said intake port having a proximal end attached to said vacuum appliance, an intermediary portion with a plurality of axially located attachment nodes and an elongated distal end, wherein said elongated distal end has a continuous generally tubular surface adapted to be engaged by standard friction fit accessories; and
a vacuum accessory having a plurality of axially located spiral grooves for receivable attachment to said plurality of axially located attachment nodes of said intermediary portion.

15. The vacuum appliance attachment mechanism of claim 14, wherein said attachment nodes are integrally formed exterior to said intermediary portion.

16. The vacuum appliance attachment mechanism of claim 14, wherein said vacuum accessory transports debris into said vacuum appliance.

17. The vacuum appliance attachment mechanism of claim 14, further comprising a vacuum seal at said attachment of said intake port and said vacuum accessory.

18. The vacuum appliance attachment mechanism of claim 14, wherein said intake port is disposed on a distal end of a hose attached to said vacuum appliance.

19. The vacuum appliance attachment mechanism of claim 14, wherein said intake port is disposed on a housing of said vacuum appliance.

20. The vacuum appliance attachment mechanism of claim 14, wherein said continuous generally tubular surface of said elongated distal end is tapered.
